# FASCICULE DE BREVET EUROPEEN

(11) **EP 1 873 972 B1**
(45) Date de publication et mention de la délivrance du brevet: **04.07.2018**
(21) Numéro de dépôt: 07011937.5
(22) Date de dépôt: 19.06.2007
(51) Int. Cl.: H04L 12/28, G08C 17/00

(54) **PROCÉDÉ DE COMMUNICATION DANS UNE INSTALLATION DOMOTIQUE**
KOMMUNIKATIONSVERFAHREN IN EINER HEIMANLAGE
COMMUNICATION METHOD IN A HOME AUTOMATION SYSTEM

(30) Priorité: 26.06.2006 FR 0605705; 30.06.2006 FR 0605929
(43) Date de publication de la demande: 02.01.2008
(73) Titulaire: SOMFY ACTIVITES SA, 74300 Cluses (FR)
(72) Inventeur: Pellarin, Florent, 74370 Saint Martin Bellevue (FR); Augustin, Barbara, 74950 Scionzier (FR)
(74) Mandataire: Bugnion Genève

(56) Documents cités:
- WO-A2-01/22661
- US-A1- 2003 014 646
- US-A1- 2006 025 181

## Description

L'invention se rapporte à la transmission de commandes ou de données entre éléments d'une installation domotique à l'attention d'éléments autonomes. Les éléments communiquent entre eux par exemple par radio-fréquences. Ils peuvent comprendre notamment des actionneurs, des capteurs et des points de commande.

Les actionneurs sont en général alimentés sur le réseau commercial d'alimentation électrique, tandis que les capteurs et le point de commande sont en général autonomes, par exemple, alimentés par des piles sèches ou rechargeables.

Un problème se pose dans une telle installation dès lors que les éléments autonomes sont de type bidirectionnel : comment éviter une écoute permanente par les récepteurs radio-fréquences, qui a pour effet d'augmenter la consommation et donc de réduire l'autonomie.

Ce problème a donné lieu à de nombreuses inventions.

Dans un premier groupe d'inventions, la demande de brevet WO 00/28776 prévoit que les récepteurs se réveillent à heure fixe. Il est donc nécessaire que ceux-ci contiennent au moins un dispositif horloge qui soit alimenté en permanence. Une méthode similaire est décrite dans la demande EP 1 404 043.

Un deuxième groupe d'inventions prévoit l'usage de routeurs, pour lesquels le problème de l'alimentation ne se pose pas, par exemple parce qu'alimentés sur le réseau commercial, ou parce qu'alimentés par une réserve d'énergie importante.

La demande de brevet EP 1 545 076 décrit l'usage d'une automobile comme relais d'un dispositif nomade dans un réseau cellulaire. On retrouve des usages voisins dans les demandes JP59092133 et JP11276343. Dans un domaine lié à la domotique, le brevet US 6,525,645 décrit également l'usage d'un répéteur situé dans l'automobile et alimenté par l'accumulateur de celle-ci. Pour peu que le code d'identification soit valide, le signal émis par le dispositif nomade tenu par le chauffeur est répété à l'identique mais avec un signal plus puissant par le répéteur.

Le brevet US 7,027,416 décrit également une installation de type domotique : les dispositifs autonomes communiquent chacun avec un routeur, au moyen d'une communication faible puissance, permettant de réduire à la fois la portée et la consommation. Les routeurs communiquent entre eux à plus forte puissance et selon des bandes de fréquence différentes, avec un protocole différent de celui utilisé dans la communication bas niveau. La communication entre deux éléments nécessite le recours d'au moins un routeur, en général plusieurs. Il est prévu qu'un élément autonome soit périodiquement ou aléatoirement désactivé selon un rapport cyclique pré-établi. Le routeur devant communiquer avec un tel élément est averti de ce fonctionnement et en tient compte pour définir les instants de transmission. Il n'est pas prévu que des éléments puissent communiquer directement entre eux, ce qui s'explique par la nature hiérarchisée du réseau et par le fait que les décisions sont prises par un contrôleur local et/ou déporté, par exemple via le réseau téléphonique. Le contrôleur gère également la table de routage principale, à partir de la connaissance des tables de routage locales.

Un troisième groupe d'inventions décrit l'usage de répéteurs de type « boîte à lettres ».

Le brevet US 4,803,487 traite le cas d'un pager avec moyen d'affichage déporté. Par exemple, le récepteur principal, ou premier récepteur, reçoit les messages et les stocke en mémoire. Il est alimenté par une batterie de forte capacité, et néanmoins d'un dispositif économiseur, provoquant le sommeil sur un intervalle de temps donné si le pager n'est pas destinataire du message. Ce récepteur principal communique par un moyen éventuellement bidirectionnel avec l'afficheur déporté. La liaison entre l'afficheur et le premier récepteur se fait avec un protocole différent du protocole de communication utilisé pour transmettre les messages vers chaque pager. Sur activation d'une commande de l'utilisateur, le transmetteur de l'afficheur déporté interroge le premier récepteur, qui émet alors les informations contenues en mémoire vers le récepteur de l'afficheur déporté.

Les dispositifs de l'art antérieur font donc appel à des structures complexes supportant plusieurs moyens ou protocoles de communication, ou proposent un seul moyen de communication mais avec des performances limitées pour la télécommande nomade, le problème étant alors traité sous l'angle de la réduction de consommation à l'émission, et non à la réception. Un problème se pose notamment lorsque la télécommande nomade est remplacée par un capteur non facilement accessible (et pour lequel le remplacement de piles est difficile), et plus encore lorsque le relais intelligent est lui-même autonome, voire nomade.

On connaît encore de la demande US 2006/0025181, une installation comprenant un ensemble d'éléments communiquant sur un réseau. L'un des éléments peut en outre communiquer avec un terminal autonome ne faisant pas partie du réseau. Ce terminal autonome fonctionne selon un cycle alternant des phases de réveil et de sommeil afin d'optimiser son autonomie. Ainsi, dans le cas où l'élément du réseau désire transmettre des données au terminal alors que celui-ci est dans une phase de sommeil, cet élément de réseau doit stocker les données en mémoire et attendre une information de réveil du terminal autonome avant de lui envoyer effectivement les données. Dans cette installation, les possibilités de communication du terminal avec les éléments du réseau sont très limitées : il ne peut communiquer, tant en émission qu'en réception, qu'avec un seul élément.

Le but de l'invention est de fournir un procédé de communication permettant d'obvier aux inconvénients cités et d'améliorer les procédés de communication connus de l'art antérieur. En particulier, le procédé de communication selon l'invention permet de minimiser la consommation d'énergie due à la communication des éléments autonomes d'une installation domotique organisée en un réseau d'éléments domotiques et en particulier de minimiser l'énergie consommée hors des phases d'émissions de signaux.

Le procédé de communication s'applique à une installation domotique comprenant au moins un élément expéditeur, un élément destinataire autonome et un élément de substitution de l'élément destinataire, l'élément expéditeur, l'élément destinataire et l'élément de substitution appartenant à un même réseau. Le procédé est tel que, lorsque l'élément destinataire est dans un mode de sommeil, l'élément de substitution reçoit et enregistre des informations émises par l'élément expéditeur à l'attention de l'élément destinataire et tel que, lorsque l'élément destinataire n'est plus en mode de sommeil, l'élément de substitution émet à l'attention de l'élément destinataire ces informations.

Lorsque l'élément destinataire est en mode de sommeil, suite à la réception des informations, l'élément de substitution peut confirmer à l'élément expéditeur la bonne réception de celles-ci en substituant l'identifiant de l'élément destinataire à l'identifiant de l'élément de substitution.

L'élément de substitution peut recevoir et enregistrer des informations émises par l'élément expéditeur à l'attention de l'élément destinataire seulement après que l'élément de substitution a reçu de l'élément destinataire une information de passage dans un mode de sommeil.

L'élément de substitution peut recevoir et enregistrer des informations émises par l'élément expéditeur à l'attention de l'élément destinataire seulement après que l'élément de substitution a mesuré une durée prédéterminée après réception d'un dernier message reçu par l'élément de substitution et émis par l'élément destinataire.

L'élément de substitution peut être apte à se substituer à plusieurs éléments destinataires.

L'élément de substitution peut être désigné parmi les éléments de l'installation au cours d'une procédure préalable de désignation.

L'élément de substitution peut être déterminé au cours d'une procédure préalable d'apprentissage dans laquelle on mesure dans les différents éléments le niveau de réception d'un signal émis par l'élément destinataire.

Le signal peut être émis à puissance réduite par l'élément destinataire.

La sensibilité de réception du signal peut être réduite dans chaque élément de l'installation susceptible de devenir un élément de substitution.

L'installation domotique selon l'invention comprend au moins un élément expéditeur et un élément destinataire autonome. Elle est caractérisée en ce qu'elle comprend des moyens matériels et logiciels pour mettre en oeuvre le procédé de communication défini précédemment.

Le dessin annexé représente, à titre d'exemple, un mode de réalisation d'une installation domotique selon l'invention et des modes d'exécution d'un procédé de communication selon l'invention.
La figure 1 est un schéma d'un mode de réalisation d'une installation selon l'invention.
La figure 2 est un ordinogramme d'un mode d'exécution d'un procédé de communication selon l'invention.
Les figures 3 et 4 sont des chronogrammes de deux variantes d'exécution du procédé de communication.
La figure 5 est un ordinogramme d'un procédé de désignation d'un élément de substitution selon l'invention.
La figure 6 est un ordinogramme d'un procédé d'apprentissage d'un élément de substitution selon l'invention.

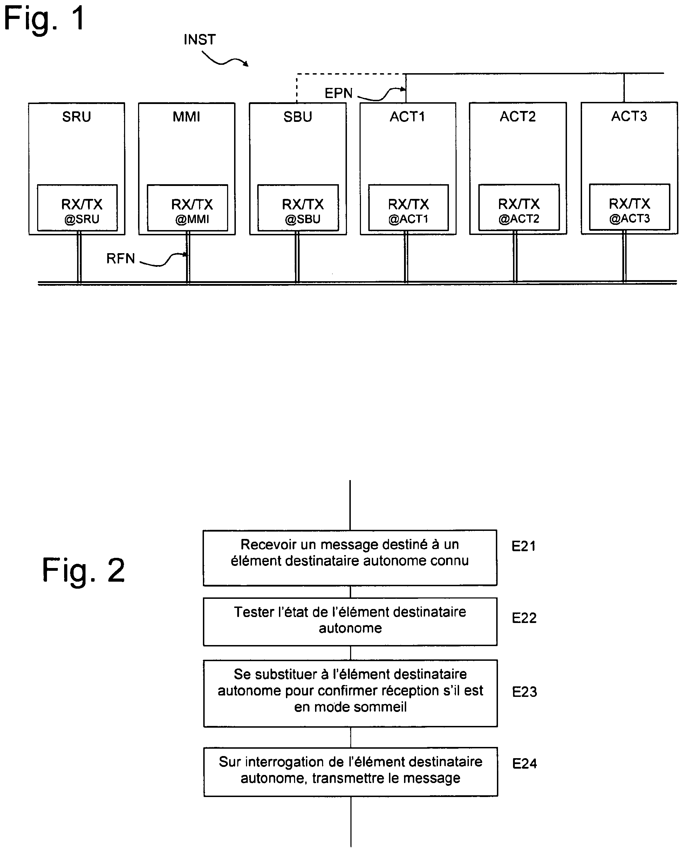

Dans l'installation domotique INST représentée sur la figure 1, divers éléments SRU, MMI, SBU, ACT1, ACT2, ACT3 communiquent sur un même réseau radiofréquences RFN, symbolisé par un double trait. La communication entre éléments est réalisée par des transmetteurs bidirectionnels RX/TX, différenciés par l'adresse ou identifiant de chaque élément. L'installation comporte des éléments ACT1, ACT3 alimentés par le réseau électrique EPN, tandis que d'autres éléments SRU, MMI, ACT2 sont autonomes en énergie. La communication entre les éléments du réseau peut être assurée par d'autres moyens, tels que notamment des moyens de transmission infrarouge. Les différents éléments utilisent un même protocole de communication.

Un capteur, ou unité capteur SRU, dont l'adresse est notée @SRU, transforme en grandeur numérique, et/ou en ordres de commande établis à partir de seuils de comparaison, la valeur d'un paramètre climatique ou de confort.

Un boîtier d'interface homme-machine MMI, dont l'adresse est notée @MMI, permet d'envoyer des commandes utilisateur vers les éléments, ou d'afficher des messages d'état. Ces deux éléments sont autonomes en énergie. L'interface homme machine est par exemple une télécommande nomade, avec clavier et écran.

Un premier actionneur ACT1, dont l'adresse est notée @ACT1, active la manoeuvre d'un volet roulant, d'une porte ou d'un portail. Ce premier actionneur est alimenté sur le réseau électrique EPN.

Un deuxième actionneur ACT2, dont l'adresse est notée @ACT2, active la manoeuvre d'une protection solaire intérieure. Ce deuxième actionneur est autonome en énergie.

Un troisième actionneur ACT3, dont l'adresse est notée @ACT3, active un moyen d'éclairage. Il comprend par exemple un gradateur et une lampe fluorescente. Il est alimenté par le réseau électrique EPN.

Les adresses, ou identifiants, de chacun des éléments du réseau sont connues de l'ensemble des autres éléments du réseau avec lesquels ils sont susceptibles de communiquer. Cet enregistrement d'adresses, ou d'identifiants a lieu pendant une opération de configuration ou d'appairage, selon des procédés connus de l'homme du métier. Ainsi, les actionneurs ont-ils connaissance des boîtiers d'interface homme-machine ou des capteurs dont ils peuvent recevoir des ordres de commande.

Tous les éléments du réseau domotique RFN, et en particulier les éléments autonomes en énergie, partagent une même clé d'authentification, ou clé-maison, permettant de reconnaître l'appartenance au réseau domotique.

Les éléments autonomes en énergie sont alimentés par pile sèche, alternativement par accumulateur, supercondensateur, pile à combustible, avec un éventuel moyen de transformation d'une énergie non-électrique en énergie électrique, tel que par exemple un capteur photovoltaïque.

Un élément particulier SBU de l'installation est dit « élément de substitution ». Cet élément est préférentiellement alimenté sur le réseau électrique EPN, comme représenté par un trait pointillé. En variante, l'élément de substitution est autonome en énergie, mais dispose d'autonomie beaucoup plus grande que les autres éléments autonomes pour lesquels le procédé de communication de l'invention est mis en oeuvre. L'adresse de l'élément de substitution est notée @SBU. Il contient une mémoire MEM permettant le stockage d'informations. Avantageusement, l'élément de substitution est lui-même contenu dans un actionneur alimenté par le réseau électrique, mais il peut s'agir d'un élément séparé dont la seule fonction est de permettre l'application du procédé de communication selon l'invention.

L'intérêt du procédé est de permettre aux éléments autonomes et destinataires d'informations de passer en mode de sommeil avec un rapport cyclique (rapport entre les durées des phases d'éveil et les durées des phases de sommeil) de très faible valeur. Inversement, l'élément de substitution est en écoute permanente, ou fonctionne au moins avec un rapport cyclique suffisant pour garantir la réception de tout message radio.

Un mode d'exécution du procédé est représenté schématiquement à la figure 2, tel qu'il est appliqué par l'élément de substitution SBU.

Dans une première étape E21, l'élément de substitution reçoit d'un élément expéditeur des informations qui ne lui sont pas adressées, mais qui sont destinées à un élément destinataire autonome connu de l'élément de substitution. Des procédés de désignation ou d'apprentissage permettant à l'élément de substitution de connaître un élément destinataire autonome (ou les éléments destinataires autonomes) sont décrits plus loin.

Dans une deuxième étape E22, l'élément de substitution s'assure que l'élément destinataire autonome est en mode sommeil. Si ce n'est pas le cas, le procédé boucle sur la phase initiale d'écoute radio. Si par contre l'élément de substitution détermine que l'élément destinataire autonome est en sommeil, alors on passe à une troisième étape E23 dans laquelle l'élément de substitution stocke les informations dans sa mémoire MEM et accuse bonne réception de ces informations en émettant un message de confirmation de réception à l'attention de l'élément expéditeur. L'élément de substitution a substitué dans ce message de confirmation de réception l'adresse de l'élément autonome destinataire à sa propre adresse. Ainsi, à cet instant, pour l'élément expéditeur les informations ont été transmises à l'élément destinataire.

Sur interrogation de l'élément destinataire autonome, dans une quatrième étape E24, l'élément de substitution lui communique les informations enregistrées en mémoire. L'interrogation est constituée par un message spécifiquement adressé par l'élément destinataire autonome. Alternativement, l'interrogation est constituée par un message diffusé, sans destinataire particulier (en mode dit : « *broadcast* »), par l'élément destinataire autonome lors de chacun de ses réveils.

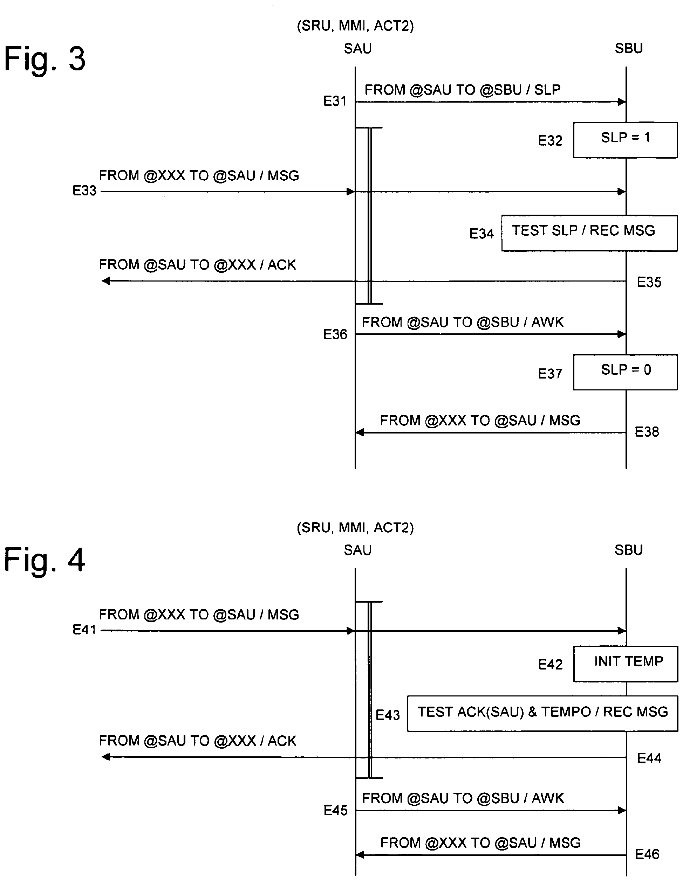

La figure 3 illustre l'application du procédé par un premier exemple d'échanges entre éléments, sous forme de chronogramme, le temps se déroulant du haut vers le bas.

La ligne verticale de gauche désigne un élément destinataire autonome SAU qui est constitué à titre d'exemple par l'un des éléments autonomes de l'installation : le capteur SRU, l'interface homme-machine MMI ou le deuxième actionneur ACT2. La ligne verticale de droite est constituée par l'élément de substitution SBU. Il est supposé que l'élément de substitution connaît déjà l'élément destinataire autonome, et réciproquement.

Dans un état initial, l'élément destinataire autonome SAU, par exemple préalablement réveillé par son horloge interne, ou par une action utilisateur, ou pour toute autre cause, termine son activité. Il y a alors passage à une première étape E31 dans laquelle l'élément destinataire informe l'élément de substitution qu'il va passer en mode sommeil, ce qui est représenté par le message « SLP ». A réception de cette information, l'élément de substitution confirme la réception (confirmation non représentée) et, dans une deuxième étape E32 il fait passer à l'état haut un indicateur interne SLP pour enregistrer la situation de sommeil de l'élément destinataire autonome.

De son côté, l'élément destinataire autonome passe en mode sommeil, état qui est représenté par un double trait vertical.

Dans une troisième étape E33, un message MSG est adressé à l'élément destinataire autonome, en provenance d'un autre élément de l'installation, dit élément expéditeur et noté XXX. Cet élément expéditeur XXX est quelconque. Il s'agit par exemple du troisième actionneur ACT3 qui veut signaler à l'élément destinataire autonome (la télécommande nomade comportant l'interface homme-machine MMI) qu'un ordre de manoeuvre a bien été exécuté. Ou encore, l'élément expéditeur XXX est la télécommande nomade qui veut indiquer au capteur SRU les valeurs de ses nouveaux seuils de réaction.

Ce message n'est pas perçu par l'élément destinataire autonome qui est en mode sommeil, mais il est capté par l'élément de substitution.

Dans une quatrième étape E34, l'élément de substitution SBU teste l'état de l'indicateur interne SLP. Celui-ci étant à l'état haut, il y a enregistrement du message MSG dans l'élément de substitution et déclenchement d'une cinquième étape E35 de confirmation de réception. Au cours de cette étape, l'élément de substitution prend l'identité de l'élément destinataire, c'est-à-dire qu'il indique, dans la confirmation de réception, l'identifiant ou l'adresse de l'élément destinataire autonome au lieu de sa propre adresse. L'élément expéditeur constate alors qu'il y a bonne réception et termine donc la session d'émission en cours, sans qu'il soit tenté de procéder à des émissions multiples qui encombreraient inutilement le réseau.

Après réveil de l'élément destinataire SAU (fin du double trait vertical), il y a passage à une sixième étape E36, dans laquelle l'élément destinataire informe l'élément de substitution qu'il est de nouveau actif, ce qui est représenté par le message « AWK ». Cela a pour effet de faire passer à l'état bas l'indicateur interne SLP, dans une septième étape E37, puis de provoquer le passage à une huitième étape E38 dans laquelle le message MSG, mémorisé dans l'élément de substitution est émis à l'attention de l'élément destinataire. Dans cette étape E38, l'élément de substitution peut substituer l'identifiant de l'élément expéditeur à son propre identifiant. Ainsi, le procédé de communication est transparent par rapport à l'élément destinataire, c'est-à-dire que pour lui tout se passe comme s'il avait reçu directement le message MSG de l'élément expéditeur.

Dans ce premier exemple, la deuxième étape E22 du procédé de communication est donc effectuée par un test sur la nature d'une information communiquée par l'élément destinataire lui-même.

La figure 4 constitue un deuxième exemple, dans lequel l'étape E22 du procédé de communication est réalisée différemment. Ce deuxième mode de réalisation est basé sur la détection d'une absence de réponse à un message adressé à l'élément destinataire autonome. Cette absence de réponse est présumée liée au mode sommeil de l'élément autonome.

Dans une première étape E41, un message MSG est adressé à destination de l'élément destinataire autonome SAU, en provenance d'un autre élément de l'installation, appelé élément expéditeur et noté XXX. A cet instant, l'élément destinataire est dans un mode de sommeil, représenté par un double trait vertical. Ce message n'est pas perçu par l'élément destinataire, mais il est capté par l'élément de substitution, qui déclenche alors une deuxième étape E42 d'initialisation de temporisation. Pendant cette temporisation, l'élément de substitution teste s'il y a réponse de la part de l'élément destinataire autonome, par exemple sous forme d'un accusé de réception. De manière plus générale, l'élément de substitution teste s'il y a activité d'émission de la part de l'élément destinataire autonome. Ce test fait l'objet d'une troisième étape E43 qui se termine par l'enregistrement du message MSG par l'élément de substitution si aucune activité radio n'a été détectée de la part de l'élément destinataire autonome pendant la durée de temporisation et qu'on conclut à son état de mode sommeil. Dans ce cas, il y a passage à une quatrième étape E44 de confirmation de réception. Au cours de cette étape, l'élément de substitution prend l'identité de l'élément destinataire, c'est-à-dire qu'il indique, dans la confirmation de réception, l'identifiant ou l'adresse de l'élément destinataire autonome au lieu de sa propre adresse.

L'élément expéditeur constate alors qu'il y a bonne réception et termine donc la session d'émission en cours, sans qu'il soit tenté de procéder à des émissions multiples qui encombreraient inutilement le réseau.

Après réveil ou plus généralement retour à un mode opérationnel de l'élément destinataire SAU (fin du double trait vertical), il y a passage à une cinquième étape E45, dans laquelle l'élément destinataire informe l'élément de substitution qu'il est de nouveau actif, ce qui est représenté par le message « AWK ». Cela a pour effet de faire passer à une sixième étape E46 dans laquelle le message MSG, mémorisé dans l'élément de substitution est émis à l'attention de l'élément destinataire. Dans cette étape E46, l'élément de substitution peut substituer l'identifiant de l'élément expéditeur à son propre identifiant. Ainsi, le procédé de communication est transparent par rapport à l'élément destinataire, c'est-à-dire que pour lui tout se passe comme s'il avait reçu directement le message MSG de l'élément expéditeur.

Dans des variantes de réalisation, les messages contenant l'information d'endormissement ou de réveil de l'élément destinataire sont émis selon un mode de diffusion, indiquant l'expéditeur du message mais ne précisant pas de destinataire particulier. Seul l'élément de substitution concerné en fait alors usage.

Un même élément de substitution peut se substituer à plusieurs éléments destinataires autonomes, c'est-à-dire au moins recevoir et enregistrer des messages destinés à plusieurs éléments destinataires autonomes, pourvu qu'il en ait connaissance individuellement.

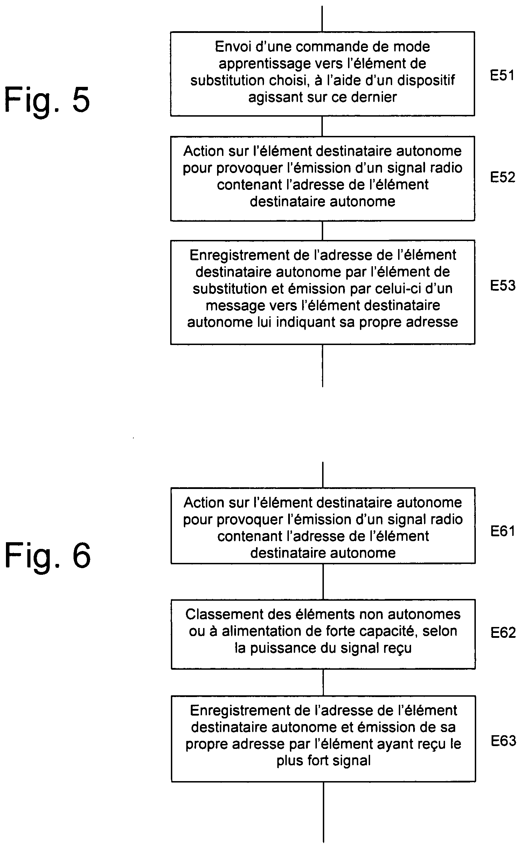

La figure 5 décrit un procédé de désignation d'un élément de substitution. Dans une première étape E51, il y a envoi d'une commande de passage en mode d'apprentissage vers un élément de substitution SBU choisi, par action d'un dispositif sur ce dernier. Par exemple, l'action peut être le fait de brancher l'élément de substitution SBU dans une prise électrique le raccordant au réseau d'alimentation. L'action peut être, si l'élément de substitution est compris dans l'un des actionneurs, d'envoyer un signal de programmation à partir d'une télécommande déjà appairée à l'actionneur.

Dans une deuxième étape E52, il y a action sur l'élément destinataire autonome SAU (SRU, MMI, ACT2) pour provoquer l'émission d'un signal radio contenant l'adresse de l'élément destinataire. Cette action est par exemple un appui sur une touche activant un contact dans l'élément destinataire autonome.

Dans une troisième étape E53, il y a enregistrement de l'adresse de l'élément autonome @SAU par l'élément de substitution et émission par celui-ci d'un message vers l'élément destinataire autonome lui indiquant sa propre adresse @SBU. A l'issue de cette troisième étape, l'élément de substitution connaît l'élément destinataire autonome auquel il supplée, et réciproquement.

La figure 6 décrit un procédé d'apprentissage d'un élément de substitution. Dans une première étape E61, il y a action sur l'élément destinataire autonome pour provoquer l'émission d'un signal radio spécifique contenant l'adresse de l'élément destinataire autonome. Cette action est par exemple l'appui sur une touche spécifique activant un contact dans l'élément destinataire autonome. Ce signal radio spécifique contient par exemple une commande spécifique de passage en mode d'apprentissage. Préférentiellement, le signal radio spécifique est émis à puissance réduite.

Dans une deuxième étape E62, il y a réception du signal par tous les éléments de l'installation qui sont à l'écoute et classement des éléments non autonomes ou à alimentation de forte capacité, selon la puissance du signal reçu. Le classement peut être réalisé de la manière suivante : avec une durée aléatoire après réception du signal, un des éléments prend la parole et diffuse sur le réseau radio un message contenant son identifiant et la valeur du niveau reçu. Après cette première diffusion, seuls les éléments ayant reçu un niveau supérieur à cette valeur sont susceptibles de prendre la parole lors d'une deuxième diffusion de la valeur du niveau reçu. Très rapidement, selon la complexité de l'installation, il ne subsiste que l'élément ayant reçu le signal dans les meilleures conditions. Selon ce procédé, cet élément devient alors l'élément de substitution.

Dans une troisième étape E63, il y a alors émission vers l'élément destinataire d'un message contenant l'adresse de l'élément de substitution, tandis que celui-ci enregistre l'adresse de l'élément destinataire qu'il supplée. Alternativement, l'élément destinataire qui passe en mode sommeil après l'émission de la première étape E61, est réveillé après une temporisation prédéterminée et diffuse un signal pour signaler qu'il est réveillé. Seul l'élément ayant reçu le signal dans les meilleures conditions (déterminé lors de la deuxième étape E62) répond en communiquant son adresse.

Il ressort des modes de réalisation décrites que l'élément de substitution doit impérativement connaître l'identifiant de l'élément destinataire auquel il supplée. Par contre, la réciproque n'est pas nécessaire : en effet, les étapes E36 de la figure 3 et E45 de la figure 4 d'émission d'un signal vers l'élément de substitution peuvent être avantageusement remplacées par des étapes de diffusion, sans mention de l'élément ou des éléments auxquels ce signal est destiné. Dans ce cas, les phases finales des troisièmes étapes E53 et E63 sont supprimées. De plus, comme il a été vu précédemment dans la description des étapes E38 et E46, l'élément destinataire peut recevoir un message de l'élément de substitution en considérant celui-ci comme venant de l'élément expéditeur.

Par « élément expéditeur », on entend dans la présente demande un élément expéditeur de n'importe quel type d'information (ordre de commande, donnée, accusé de réception...). L'élément est qualifié une fois pour toute d'« élément expéditeur » relativement à une information (par exemple un accusé de réception) même si il est également destinataire d'un ordre de commande à l'origine de l'accusé de réception.

Par « élément destinataire », on entend dans la présente demande un élément destinataire de n'importe quel type d'information (ordre de commande, donnée, accusé de réception...). L'élément est qualifié une fois pour toute d'« élément destinataire » relativement à une information (par exemple un ordre de commande) même si il est également expéditeur d'un accusé de réception en réponse à cet ordre de commande.

L'invention est particulièrement avantageuse dans le cas où l'installation comporte plusieurs capteurs autonomes, et plus encore si le pilotage de l'installation est lui-même assuré par un élément autonome.

Les programmes permettant l'application du procédé de communication sont de préférence implantés lors de la fabrication dans tout dispositif alimenté sur le réseau électrique. Alternativement, un tel programme est téléchargeable sur un ou plusieurs éléments particuliers de l'installation, une fois celle-ci réalisée.

Dans la présente invention les différents éléments (expéditeur, destinataire et de substitution) appartiennent à un même réseau et peuvent, de ce fait, communiquer deux à deux en utilisant un protocole et des moyens communs. Ainsi, l'élément destinataire peut directement communiquer avec les différents autres éléments du réseau quand il est actif, ce qui limite le trafic sur le réseau. Par ailleurs, l'élément destinataire est utilisable dans un réseau simple ne comprenant pas d'élément de substitution. Dans ce cas, les messages émis par l'élément destinataire seraient reçus par les autres éléments qui seraient en permanence actifs. Par contre, les messages émis vers l'élément destinataire devraient être répétés jusqu'à son réveil. L'accroissement de trafic qui en résulte est supporté par le fait qu'il s'agit d'un réseau simple.

## Revendications

1. Procédé de communication dans une installation domotique (INST) comprenant au moins un élément expéditeur (XXX), un élément destinataire autonome (SAU) et un élément (SBU) de substitution de l'élément destinataire, l'élément expéditeur, l'élément destinataire et l'élément de substitution appartenant à un même réseau (RFN) de sorte que l'élément destinataire peut directement communiquer avec les différents autres éléments du réseau quand il est actif, l'élément expéditeur, l'élément destinataire et l'élément de substitution partageant une même clé d'authentification permettant de reconnaître l'appartenance au réseau domotique, où l'élément de substitution est en écoute permanente, ou fonctionne au moins avec un rapport cyclique suffisant pour garantir la réception de tout message radio, le procédé comprenant une étape où l'élément de substitution détermine que l'élément destinataire est dans un mode de sommeil, une étape où, lorsque l'élément destinataire est dans un mode de sommeil [43], l'élément de substitution reçoit et enregistre des informations émises par l'élément expéditeur à l'attention de l'élément destinataire, une étape où lorsque l'élément destinataire n'est pas en mode de sommeil, les informations sont échangées directement entre l'élément expéditeur et l'élément destinataire, une étape où l'élément destinataire informe l'élément de substitution qu'il est à nouveau actif [52], et une étape où, lorsque l'élément destinataire n'est plus en mode de sommeil, l'élément de substitution émet à l'attention de l'élément destinataire ces informations.

2. Procédé de communication selon la revendication 1, **caractérisé en ce que**, lorsque l'élément destinataire est en mode de sommeil, suite à la réception des informations, l'élément de substitution confirme à l'élément expéditeur la bonne réception de celles-ci en substituant l'identifiant de l'élément destinataire à l'identifiant de l'élément de substitution.

3. Procédé de communication selon l'une des revendications précédentes, **caractérisé en ce que** l'élément de substitution reçoit et enregistre des informations émises par l'élément expéditeur à l'attention de l'élément destinataire seulement après que l'élément de substitution a reçu de l'élément destinataire une information de passage dans un mode de sommeil.

4. Procédé de communication selon l'une des revendications 1 ou 2, **caractérisé en ce que** l'élément de substitution reçoit et enregistre des informations émises par l'élément expéditeur à l'attention de l'élément destinataire seulement après que l'élément de substitution a mesuré une durée prédéterminée après réception d'un dernier message reçu par l'élément de substitution et émis par l'élément destinataire.

5. Procédé de communication selon l'une des revendications précédentes, **caractérisé en ce que** l'élément de substitution est apte à se substituer à plusieurs éléments destinataires.

6. Procédé de communication selon l'une des revendications précédentes, **caractérisé en ce que** l'élément de substitution est désigné parmi les éléments de l'installation au cours d'une procédure préalable de désignation.

7. Procédé de communication selon l'une des revendications 1 à 6, **caractérisé en ce que** l'élément de substitution est déterminé au cours d'une procédure préalable d'apprentissage dans laquelle on mesure dans les différents éléments le niveau de réception d'un signal émis par l'élément destinataire.

8. Procédé de communication selon la revendication précédente, **caractérisé en ce que** le signal est émis à puissance réduite par l'élément destinataire.

9. Procédé de communication selon la revendication 7 ou 8, **caractérisé en ce que** la sensibilité de réception du signal est réduite dans chaque élément de l'installation susceptible de devenir un élément de substitution.

10. Procédé de communication selon l'une des revendications précédentes, **caractérisé en ce que** l'élément de substitution émet à l'attention de l'élément destinataire les informations en substituant l'identifiant de l'élément expéditeur à l'identifiant de l'élément de substitution.

11. Procédé de communication selon la revendication précédente, **caractérisé en ce que** l'élément de substitution est apte à se substituer à plusieurs éléments expéditeurs.

12. Installation domotique (INST) comprenant au moins un élément expéditeur (XXX), un élément destinataire autonome (SAU), et un élément (SBU) de substitution de l'élément destinataire, **caractérisée en ce qu'**elle comprend des moyens matériels (MEM, RX/TX@SBU) et logiciels pour mettre en oeuvre le procédé de communication selon l'une des revendications précédentes.

## Patentansprüche

1. Kommunikationsverfahren in einer Heimanlage (INST), umfassend mindestens ein Sendeelement (XXX), ein autonomes Empfangselement (SAU) und ein Substitutionselement (SBU) des Empfangselements, wobei das Sendeelement, das Empfangselement und das Substitutionselement zu einem selben Netz (RFN) gehören, so dass das Empfangselement mit den verschiedenen anderen Elementen des Netzes direkt kommunizieren kann, wenn es aktiv ist, wobei sich das Sendelement, das Empfangselement und das Substitutionselement einen selben Authentifizierungsschlüssel teilen, der erlaubt, die Zugehörigkeit zum Heimnetz zu erkennen, wobei das Substitutionselement ständig auf Empfang ist oder mindestens mit einem zyklischen Rapport arbeitet, der ausreichend ist, um den Empfang jeder Funknachricht zu garantieren, wobei das Verfahren einen Schritt umfasst, bei dem das Substitutionselement ermittelt, dass das Empfangselement in einem Schlafmodus ist, einen Schritt, bei dem, wenn das Empfangselement in einem Schlafmodus [43] ist, das Substitutionselement von dem Sendeelement an das Empfangselement gesendete Informationen empfängt und registriert, einen Schritt, bei dem, wenn das Empfangselement nicht im Schlafmodus ist, die Informationen direkt zwischen dem Sendelement und dem Empfangselement ausgetauscht werden, einen Schritt, bei dem das Empfangselement das Substitutionselement informiert, dass es wieder aktiv [52] ist, und einen Schritt, bei dem, wenn das Empfangselement nicht mehr im Schlafmodus ist, das Substitutionselement diese Informationen an das Empfangselement sendet.

2. Kommunikationsverfahren nach Anspruch 1, **dadurch gekennzeichnet, dass**, wenn das Empfangselement im Schlafmodus ist, das Substitutionselement dem Sendeelement nach Empfang der Informationen den guten Empfang derselben durch Ersetzen des Kennworts des Empfangselements durch das Kennwort des Substitutionselements bestätigt.

3. Kommunikationsverfahren nach einem der vorangehenden Ansprüche, **dadurch gekennzeichnet, dass** das Substitutionselement von dem Sendeelement an das Empfangselement gesendete Informationen erst dann empfängt und registriert, nachdem das Substitutionselement vom Empfangselement eine Information des Übergangs in einen Schlafmodus erhalten hat.

4. Kommunikationsverfahren nach einem der Ansprüche 1 oder 2, **dadurch gekennzeichnet, dass** das Substitutionselement von dem Sendeelement an das Empfangselement gesendete Informationen erst dann empfängt und registriert, nachdem das Substitutionselement eine vorbestimmte Dauer nach Empfang einer vom Substitutionselement empfangenen und vom Empfangselement gesendeten letzten Nachricht gemessen hat.

5. Kommunikationsverfahren nach einem der vorangehenden Ansprüche, **dadurch gekennzeichnet, dass** das Substitutionselement imstande ist, mehrere Empfangselemente zu ersetzen.

6. Kommunikationsverfahren nach einem der vorangehenden Ansprüche, **dadurch gekennzeichnet, dass** das Substitutionselement aus dem Elementen der Anlage während eines vorherigen Bezeichnungsprozederes bezeichnet wird.

7. Kommunikationsverfahren nach einem der Ansprüche 1 bis 6, **dadurch gekennzeichnet, dass** das Substitutionselement während eines vorherigen Lernprozederes bestimmt wird, bei dem in den verschiedenen Elementen das Empfangsniveau eines vom Empfangselement gesendeten Signals gemessen wird.

8. Kommunikationsverfahren nach vorangehendem Anspruch, **dadurch gekennzeichnet, dass** das Signal vom Empfangselement mit reduzierter Leistung gesendet wird.

9. Kommunikationsverfahren nach Anspruch 7 oder 8, **dadurch gekennzeichnet, dass** die Empfangssensibilität des Signals in jedem Element der Anlage reduziert ist, das ein Substitutionselement werden könnte.

10. Kommunikationsverfahren nach einem der vorangehenden Ansprüche, **dadurch gekennzeichnet, dass** das Substitutionselement dem Empfangselement Informationen sendet, indem es das Kennwort des Sendeelements durch das Kennwort des Substitutionselements ersetzt.

11. Kommunikationsverfahren nach vorangehendem Anspruch, **dadurch gekennzeichnet, dass** das Substitutionselement imstand ist, mehrere Sendeelemente zu ersetzen.

12. Heimanlage (INST), umfassend mindestens ein Sendeelement (XXX), ein autonomes Empfangselement (SAU) und ein Substitutionselement (SBU) des Empfangselements, **dadurch gekennzeichnet, dass** sie Hardware (MEM, RX/TX@SBU) und Software umfasst, um das Kommunikationsverfahren nach einem der vorangehenden Ansprüche durchzuführen.

## Claims

1. A communication method in a home-automation installation (INST) comprising at least one sending element (XXX), a self-powered receiving element (SAU) and an element (SBU) for substituting for the receiving element, the sending element, the receiving element and the substitution element belonging to one and the same network (RFN), the method being such that, the receiving element can communicate directly with the various other elements of the network when it is active, the sending element, the receiving element and the substitution using a same authentication key, making it possible to recognize the membership of the home automation network, where the substitution element listens permanently, or operates at least with a sufficient duty ratio to guarantee receipt of any radio message, the method comprising a step in which the substitution element makes sure that the receiving element is in sleep mode, a step in which, when the receiving element is in a sleep mode [43], the substitution element receives and records information sent by the sending element for the attention of the receiving element, a step in which, when the receiving element is not in sleep mode, the information is transmitted directly between the sending element and the receiving element, a step in which the receiving element informs the substitution element that it is active again [52] and a step in which, when the receiving element is no longer in sleep mode, the substitution element sends the information for the attention of the receiving element.

2. The communication method as claimed in claim 1, wherein, when the receiving element is in sleep mode and following receipt of the information, the substitution element confirms to the sending element that it has been properly received by substituting the identifier of the receiving element for the identifier of the substitution element.

3. The communication method as claimed in anyone of the preceding claims, wherein the substitution element receives and records information sent by the sending element for the attention of the receiving element only after the substitution element has received a message from the receiving element regarding its entry into a sleep mode.

4. The communication method as claimed in claim 1 or 2, wherein the substitution element receives and records information sent by the sending element for the attention of the receiving element only after the substitution element has measured a predetermined duration after receipt of a last message received by the substitution element and sent by the receiving element.

5. The communication method as claimed in anyone of the preceding claims, wherein the substitution element is able to substitute itself for several receiving elements.

6. The communication method as claimed in anyone of the preceding claims, wherein the substitution element is designated from among the elements of the installation in the course of a prior designation procedure.

7. The communication method as claimed in anyone of claims 1 to 6, wherein the substitution element is determined in the course of a prior learning procedure in which the reception level of a signal sent by the receiving element is measured in the various elements.

8. The communication method as claimed in the preceding claim, wherein the signal is sent at reduced power by the receiving element.

9. The communication method as claimed in claim 7 or 8, wherein the signal reception sensitivity is reduced in each element of the installation capable of becoming a substitution element.

10. The communication method as claimed in anyone of the preceding claims, wherein the substitution element sends the information for the attention of the receiving element by substituting the identifier of the sending element for the identifier of the substitution element.

11. The communication method as claimed in the preceding claim, wherein the substitution element is able to substitute itself for several sending elements.

12. A home-automation installation (INST) comprising at least one sending element (XXX), a self-powered receiving element (SAU), and an element (SBU) for substituting for the receiving element which installation comprises hardware (MEM, RX/TX@SBU) and software means for implementing the communication method according to anyone of the preceding claims.
